**Europäisches Patentamt**

**European Patent Office**

**Office européen des brevets**

(11) Veröffentlichungsnummer: **0 083 446**
**B1**

# EUROPÄISCHE PATENTSCHRIFT

(45) Veröffentlichungstag der Patentschrift:
**29.10.86**

(21) Anmeldenummer: **82112044.1**

(22) Anmeldetag: **28.12.82**

(51) Int. Cl.⁴: **C 08 L 77/00, C 08 L 51/04**

(54) **Schlagzähe Polyamid-Formmassen.**

(30) Priorität: **05.01.82 DE 3200070**

(43) Veröffentlichungstag der Anmeldung:
**13.07.83 Patentblatt 83/28**

(45) Bekanntmachung des Hinweises auf die Patenterteilung:
**29.10.86 Patentblatt 86/44**

(84) Benannte Vertragsstaaten:
**CH DE FR GB IT LI NL**

(56) Entgegenhaltungen:
**EP - A - 0 003 126**
**US - A - 3 668 274**
**US - A - 3 796 771**
**US - A - 3 985 703**
**US - A - 4 306 040**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Grigo, Ulrich, Dr., c/o Mobay Chemical Corporation, New Martinsville, W. Va. 26155 (US)**
Erfinder: **Lindner, Christian, Dr., Riehlerstrasse 200, D-5000 Köln 60 (DE)**
Erfinder: **Fahnler, Friedrich, Dipl.-Ing., Wimmersweg 60, D-4150 Krefeld (DE)**
Erfinder: **Binsack, Rudolf, Dr., Betheistrasse 4 a, D-4150 Krefeld (DE)**
Erfinder: **Haupt, Heinrich, Dr., Bodelschwinghstrasse 15, D-4150 Krefeld (DE)**

**Beschreibung**

Die Erfindung betrifft schlagzähe Mischungen aus Polyamiden und Pfropfcopolymerisaten aus einem Dienkautschuk als Kern, der von wenigstens zwei verschiedenen Hüllen umgeben ist.

Polyamide sind für die Herstellung von Fasern und Formkörpern wegen ihrer wertvollen technologischen Eigenschaften, wie z.B. Steifigkeit, Zähigkeit, Spannungskorrosionsbeständigkeit und Lösungsmittelbeständigkeit von Bedeutung. Für viele Anwendungen insbesondere für grossflächige Teile reichen jedoch die Zähigkeit, insbesondere die Schlagzähigkeit bei mehraxialer Belastung, nicht aus.

Es existieren zahlreiche Vorschläge, die Zähigkeit von Polyamiden durch Zumischen anderer Polymerer, insbesondere solcher auf Basis modifizierter Elastomerer und Polyolefine anzuheben. Dabei wird jedoch mit dieser Zähigkeitsverbesserung im allgemeinen eine wesentliche Verschlechterung des Fliessvermögens der Polyamide verursacht. Ausserdem wird auch die mehraxiale Schlagzähigkeit nicht im gewünschten Masse erreicht.

In der DE-OS 2 435 266 werden gefüllte Formmassen mit erhöhter Trocken- und Kälteschlagzähigkeit, mit verbesserter Bruchzähigkeit bei multiaxialer Beanspruchung aus Polyamiden, Füllstoffen und Pfropfcopolymeren beschrieben, bei denen das Pfropfcopolymer durch Pfropfung von im wesentlichen Styrol und/oder Methacrylsäureester auf ein Copolymeres aus Acrylat und einem Comonomeren mit zwei nichtkunjugierten olefinischen Doppelbindungen hergestellt wurde.

Die genannte Druckschrift beschreibt zwar Polyamid-Formmassen mit verbesserter mehraxialer Schlagzähigkeit. Das Fliessvermögen dieser Formmassen ist jedoch unbefriedigend. Aber gerade die Kombination von hoher mehraxialer Zähigkeit und gutem Fliessvermögen ist für die Herstellung von schlagbeanspruchten grossflächigen Teilen von Bedeutung.

In der DE-OS 2 144 528 werden Polyamide beschrieben, die als Schlagzähmodifikator ein sogenanntes «mehrphasiges Polymeres» enthalten, bei dem die erste Phase eine elastomere Phase ist, die durch Polymerisation eines Monomersystems aus einem Alkylacrylat, Butadien oder Ethylen, einem vernetzenden Monomeren und einem pfropfvernetzenden Monomeren erhalten wurde, sowie einer letzten harten thermoplastischen Phase, die mit Aminen reaktionsfähige Carboxylgruppen enthält.

Die Schlagzähigkeit dieser Formmassen ist bei mehraxialer Belastung jedoch ungenügend.

Überraschenderweise gelingt es nun, die Schlagzähigkeit von Polyamiden bei mehraxialer Beanspruchung durch den Zusatz von teilchenförmigen Pfropfprodukten aus einem stark vernetzten Dienkautschuk als Kern und Pfropfsubstrat mit einer ersten Hülle aus vernetztem Acrylatkautschuk und einer zweiten Hülle aus einem Polymerisat oder Copolymerisat von Monomeren aus der Reihe Styrol, α-Methylstyrol, Acrylnitril, Methacrylnitril, Acrylsäureester, Methacrylsäureester oder Mischungen daraus zu verbessern, ohne dass das Fliessvermögen des unmodifizierten Poylamids verschlechtert wird.

Gegenstand der Erfindung sind daher Formmassen mit verbesserter Schlagzähigkeit bei mehraxialer Belastung aus

1. 40–99, vorzugsweise 60–98, insbesondere 70–97 Gew.-%, bezogen auf die Gesamtformmasse, eines Polyamids und

2. 1–60, vorzugsweise 2–40, insbesondere 3–30 Gew.-%, bezogen auf die Gesamtformmasse, von teilchenförmigen Pfropfprodukten mit einem mittleren Teilchendurchmesser ($d_{50}$) von 0.05–3 μm aus

I einem vernetzten Dienkautschuk als Kern und Pfropfsubstrat,

II einem vernetzten Acrylatkautschuk als erste Hülle und

III einem Homo- oder Copolymerisat aus Styrol, α-Methylstyrol oder einem (Meth)acrylsäurederivat, vorzugsweise Acrylnitril, Methacrylnitril, Acrylsäureester, Methacrylsäureester, oder Mischungen daraus als zweie Hülle.

Das Mengenverhältnis des Kerns I zur ersten Hülle II ist im Bereich von 0,1 zu 99,9 bis 80 zu 20 Gew.-Teile, bevorzugt 0,4 zu 99,6 bis 20 zu 80 Gew.-Teile. Der Anteil der zweiten Hülle III am gesamten Pfropfprodukt 2, beträgt 10 bis 80, bevorzugt 20 bis 50 Gew.-%, bezogen auf 2. Die erfindungsgemässen Pfropfprodukte 2, haben mittlere Teilchendurchmesser ($d_{50}$) von 0,05 bis 3 μm, bevorzugt 0,1 bis 2 μm. Besonders bevorzugte Teilchendurchmesser liegen im Bereich von 0,2 bis 1 μm.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid, Z. und Z. Polymere 250 (1972), (782–296) oder mittels Elektronenmikroskopie und anschliessende Teilchenauszählung (G. Kämpf, H. Schuster, Angew. Makromolekulare Chemie 14, (1970), (111–129) oder mittels Lichtstreuungsmessungen.

Das Material des Kerns I ist ein vernetzter Kautschuk aus einem oder mehreren konjugierten Dienen, wie Butadien, oder aus einem Copolymerisat eines konjugierten Diens mit einem α,β-ungesättigten Monomer wie Styrol und/oder Acrylnitril.

Die erste Hülle II besteht aus einem vernetzten Acrylatkautschuk. Insbesondere besteht sie aus einem vernetzten Polymerisat aus Acrylsäurealkylestern, gegebenenfalls copolymerisiert mit bis zu 40 Gew.-% anderen Vinylmonomeren. Zu den geeigneten Acrylsäureestern, die gegebenenfalls mit Halogenen wie Cl oder Br substituiert sein können, gehören $C_1$–$C_8$-Alkylester, beispielsweise Methyl-, Ethyl-, Butyl-, Octyl- und 2-Ethylhexylester, Halogenalkylester, bevorzugt $C_1$–$C_8$-Halogenalkylester, wie Chlorethylacrylat, und aromatisch-aliphatische Ester wie Benzylacrylat und Phenylethylacrylat. Sie können einzeln oder in Mischung eingesetzt werden.

Zur Vernetzung werden vorzugsweise polyfunktionelle, besonders bevorzugt mindestens trifunktionelle Monomere copolymerisiert. Beispiele sind: Ester von $\alpha,\beta$-ungesättigten Monocarbonsäuren mit einem Polyol mit vorzugsweise 2 bis 20 Kohlenstoffatomen in der Estergruppe, wie Ethylenglykoldi(meth)acrylat; Ester von Polycarbonsäuren mit einfach ungesättigten Alkoholen mit vorzugsweise 8 bis 30 Kohlenstoffatomen in der Estergruppe; Triallylverbindungen, wie Triallylcyanurat, Triallylisocyanurat; Divinylverbindungen wie Divinylbenzol; Ester von $\alpha,\beta$-ungesättigten Monocarbonsäuren mit einfach ungesättigten Alkoholen mit bevorzugt 6–12 Kohlenstoffatomen in der Estergruppe, wie Allylmethacrylat; Phosphorsäureester mit einfach ungesättigten Alkoholen, beispielsweise Triallylphosphat; 1,3,5-Triacryloylhexahydro-s-triazin sowie Diallylphthalat. Bevorzugte polyfunktionelle Monomere sind Allylmethacrylat, Ethylenglykoldimethacrylat, Diallylphthalat und cyclische Verbindungen, die mindestens drei ethylenisch ungesättigte Gruppen aufweisen.

Besonders bevorzugte polyfunktionelle Monomere sind die cyclischen Monomeren, wie Triallylcyanurat, Triallylisocyanurat, Trivinylcyanurat, 1,3,5-Triacryloylhexahydro-s-triazin, Trivinylbenzole, Triallylbenzole.

Zur Vernetzung werden bevorzugt 0,05 bis 10 Gew.-%, insbesondere 0,1 bis 5 Gew.-% der Gesamtmenge der ersten Hülle II polyfunktioneller Monomere verwendet. Das Elastomer der ersten Hülle II kann zusätzlich noch ein copolymerisierbares Monomeres oder mehrere solcher Monomeren vom Vinyl- oder Vinylidentyp einpolymerisiert enthalten, wie z.B. Acrylnitril, Styrol, $\alpha$-Methylstyrol, Acrylamide, Vinylalkylether. Diese Comonomeren können vorzugsweise in Mengen bis zu 30 Gew.-% der ersten Hülle II einpolymerisiert werden.

Die zweite Hülle III wird durch Polymerisation von Monomeren wie $\alpha$-Methylstyrol, Styrol, Acrylnitril, Methylmethacrylat oder deren Mischungen aufgepfropft. Bevorzugt sind Copolymerisate aus Styrol und Acrylnitril im Gewichtsverhältnis 90:10 bis 50:50, sowie Polymethylmethacrylat.

Die teilchenförmigen Pfropfprodukte 2 können in wässriger Emulsion wie folgt hergestellt werden:

Zunächst wird durch Emulsionspolymerisation eines konjugierten Diens der Dienkautschuk für den Kern I in Latexform hergestellt. Die Polymerisation ist bekannt. Dann wird in Gegenwart des Dienkautschuklatex, ebenfalls in wässriger Emulsion, der Acrylatkautschuk für die erste Hülle II hergestellt, indem man das Monomer bzw. die Monomeren in dem Latex emulgiert und in an sich bekannter Weise in Gegenwart radikalbildender Initiatoren polymerisiert. Der Acrylatkautschuk polymerisiert auf den Dienkautschuk. Er kann durch Mitverwendung von polyfunktionellen Monomeren bereits bei der Herstellung vernetzt werden.

Bei dieser Pfropfcopolymerisation der ersten Hülle II sollte die Bildung neuer Teilchen möglichst vollständig unterbunden werden. Ein Emulsionsstabilisator sollte daher in einer zur Oberflächenbedeckung der Teilchen erforderlichen Menge vorhanden sein. Die Grösse dieser Teilchen ist durch die Reaktionsführung in weiten Grenzen zu variieren. Verwendet man als Kern I einen agglomerierten Latex, um grosse Teilchen zu erhalten, so können diese mehrere Dienkautschukpartikel enthalten. Man kann die Polymerisation der ersten Hülle II auch so führen, dass Partikel mit Dienkautschukkern und gleichzeitig Partikel aus reinem vernetztem Acrylatkautschuk erzeugt werden. Auch solche Mischungen können unter besonderen Umständen zur Herstellung der erfindungsgemässen Formmassen dienen.

Nach Beendigung der Pfropfcopolymerisation des Acrylatkautschuks wird vorzugsweise auf den erhaltenen Latex ein Vinylmonomer oder ein Gemisch aus Vinylmonomeren der genannten Art vorzugsweise in Emulsion polymerisiert. Dabei bilden sich die Pfropfprodukte 2, unter Ausbildung der zweiten äusseren Hülle III. Bei dieser an sich bekannten Pfropfcopolymerisation, die üblicherweise in Gegenwart von Radikalstartern, z.B. wasserlöslichen Initiatoren, Emulgatoren oder Komplexbildnern/Pfropfaktivatoren, sowie Reglern durchgeführt wird, bilden sich im allgemeinen neben dem eigentlichen Pfropfcopolymerisat in bestimmtem Ausmass auch Homopolymerisate bzw. Copolymerisate der die zweite Hülle III bildenden Monomeren. Die Menge dieses ungepfropften Poylmerisates kann durch den Pfropfgrad bzw. die Pfropfausbeute charakterisiert werden. Diese hängt ab unter anderem von den Polymerisationsbedingungen, der Zusammensetzung der ersten Hülle II, der Grösse der zu pfropfenden Teilchen und der Menge an gepfropftem Acrylatkautschuk.

Pfropfprodukt 2 im Sinne der Erfindung ist deshalb das durch Polymerisation von Vinylmonomeren in Gegenwart des Kautschuklatex erhaltene Produkt, die ein Gemisch aus Pfropfcopolymerisat und Homo(co)polymerisaten der Pfropfmonomeren, unabhängig von Pfropfgrad, darstellen können.

Die so hergestellten Pfropfprodukte 2 können nach bekannten Verfahren aufgearbeitet werden, z.B. durch Koagulation der Latices mit Elektrolyten (Salze, Säuren oder Gemische davon) und anschliessende Reinigung und Trocknung oder durch sogenannte Sprühtrocknung.

Als Polyamide eignen sich alle thermoplastischen Polyamide, vorzugsweise teilkristalline Polyamide. So können als teilkristalline Polyamide für die erfindungsgemässen Formmassen Polyamid-6, Polyamid-6,6 und Copolymere aus diesen beiden Komponenten eingesetzt werden. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylendiamin und/oder Hexamethylendiamin und/ oder 2,2,4-Trimethylhexamethylendiamin und/oder 2,4,4-Trimethylhexamethylendiamin und/oder Isophorondiamin und/oder Diaminocyclohexylalkanen besteht und deren Zusammensetzung aus dem Stand der Technik bekannt ist.

Ausserdem sind Polyamide zu nennen, die ganz oder teilweise aus Lactamen mit wenigstens 5 Ringgliedern, gegebenenfalls unter Mitverwendung einer oder mehrerer der obengenannten Ausgangskomponenten, hergestellt werden.

Besonders bevorzugte teilkristalline Polyamide sind Polyamid-6 und Polyamid-6,6.

Die Polyamide sollten vorzugsweise eine relative Viskosität (gemessen an einer 1 gew.-%igen Lösung in m-Kresol bei 25 °C) von 2,0–5,0, besonders bevorzugt von 2,5–4,5 aufweisen.

Die Polyamid-Formmassen gemäss der vorliegenden Erfindung können übliche Additive, wie Gleit- und Entformungsmittel, Nucleiermittel, Stabilisatoren, Füll- und Verstärkungsstoffe, Flammschutzmittel sowie Farbstoffe enthalten.

Die erfindungsgemässe Polyamid-Formmassen können bis zu 60 Gew.-%, bezogen auf die Formmassen, Füllstoffe und/oder Verstärkungsstoffe enthalten. Bevorzugte Verstärkungsstoffe sind Glasfasern. Bevorzugte Füllstoffe die auch verstärkend wirken können, sind Glaskugeln, Glimmer, Silikate, Quarz, Talkum, Titandioxid, Wollastonit, Kaolit, calciniertes Kaolin, Feldspat.

Die Herstellung der erfindungsgemässen Formmassen kann in den üblichen Mischaggregaten wie Knetern, Ein- und Mehrwellenextrudern erfolgen. Besonders geeignet sind Doppelwellenextruder.

Die Formmassen können auf den genannten Mischaggregaten hergestellt werden, indem die beiden Komponenten 1 und 2 gemeinsam aufgeschmolzen und homogenisiert werden, oder indem das Pfropfprodukt 2 in die Schmelze des Polyamids 1 eingearbeitet wird.

Die Temperatur bei der Herstellung der Formmassen sollte unterhalb 320 °C, vorzugsweise zwischen 260 und 300 °C liegen.

Nach einem vorteilhaften Verfahren wird auf einem der genannten Mischaggregate in einem ersten Schritt eine Mischung aus

35–95, vorzugsweise 50–90 Gew.-% (bezogen auf 1 und 2) des Pfropfproduktes 2 und

5–65, vorzugsweise 10–50 Gew.-% (bezogen auf 1 und 2) des Polyamides 1, hergestellt und in einem zweiten Schritt mit weiterem Polyamid 1 zu den erfindungsgemässen Formmassen verarbeitet.

Die erfindungsgemässen Polyamid-Formmassen zwichnen sich schon bei niedrigen Gehalten an Pfropfprodukt 2 durch eine erhebliche Verbesserung der Schlagzähigkeit bei mehraxialer Belastung aus. Überraschend für die Mischungen ist auch die gute Fliessfähigkeit. Darüber hinaus zeichnen sich die Formmassen durch eine hohe Wärmeformbeständigkeit und eine hohe Beständigkeit bei der Alterung an heisser Luft aus.

Entsprechend dem Eigenschaftsprofil können die erfindungsgemässen Formmassen daher überall im Spritzguss- und Extrusionssektor dort eingesetzt werden, wo hohe mehrachsiale Zähigkeit in Kombination mit hoher Wärmebeständigkeit und hoher Heissluftbeständigkeit gefordert wird, z. B. Geräteteilen unter der Motorhaube von Kraftfahrzeugen.

Beispiele

1. Herstellung der Polydienlatices (Kern I)

a) In einem Reaktor wird unter Rühren folgende Emulsion bei 65 °C bis zum praktisch vollständigen Monomerumsatz innerhalb von ca. 22 Stunden polymerisiert:

| | |
|---|---|
| 100 | Gew.-Teile Butadien |
| 1,8 | Gew.-Teile Na-Salz der disproportionierten Abietinsäure |
| 0,257 | Gew.-Teile Natriumhydroxid |
| 0,3 | Gew.-Teile n-Dodecylmercaptan |
| 1,029 | Gew.-Teile Na-ethylendiamintetraacetat |
| 0,023 | Gew.-Teile Kaliumpersulfat |
| 760 | Gew.-Teile Wasser |

Es wird ein Latex erhalten, der Polybutadien-Teilchen eines mittleren Durchmessers ($d_{50}$) von 0,1 µm in einer Konzentration von ca. 35–36% enthält (Latex 1a).

b) Nach Vorschrift 1a) wird bei 60–68 °C innerhalb von ca. 110 Stunden folgende Emulsion polymerisiert:

| | |
|---|---|
| 100,0 | Gew.-Teile Butadien |
| 70 | Gew.-Teile Wasser |
| 1,146 | Gew.-Teile Na-Salz der disproportionierten Abietinsäure |
| 0,055 | Gew.-Teile Na-ethylendiamintetraacetat |
| 0,137 | Gew.-Teile Natriumhydroxid |
| 0,028 | Gew.-Teile Natriumhydrogencarbonat |
| 0,282 | Gew.-Teile Kaliumpersulfat |

Es wird ein Latex erhalten, der Polybutadienteilchen eines mittleren Durchmessers ($d_{50}$) von 0,4 µm in einer Konzentration von ca. 58% enthält (Latex Ib).

2. Herstellung von Acrylatkautschukteilchen, die Polybutadienkerne enthalten (Kern I mit 1. Hülle II)

a) In einem Reaktor wird unter Rühren bei 63 °C folgende Mischung vorgelegt:

| | |
|---|---|
| 200 | Gew.-Teile Latex 1a |
| 5000 | Gew.-Teile Wasser |
| 14 | Gew.-Teile Kaliumpersulfat |
| 0,9124 | Gew.-Teile Triallylcyanurat |
| 399,09 | Gew.-Teile n-Butylacrylat |

Innerhalb von 5 Stunden werden bei 63 °C folgende Mischungen in den Reaktor getrennt eindosiert:

Mischung A: 90 Gew.-Teile Na-Sulfonat von $C_{14}$–$C_{18}$-Kohlenwasserstoffen
11.900 Gew.-Teile Wasser

Mischung B: 23.09 Gew.-Teile Triallylcyanurat
10.101 Gew.-Teile n-Butylacrylat

Anschliessend lässt man 3 Stunden bei 63 °C auspolymerisieren. Die gebildeten Polymerisate besitzen Gelgehalte von 85–95 Gew.-%, gemessen in Dimethylformamid bei 25°C (M. Hoffmann, H. Krömer, R. Kuhn, Polymeranalytik I und II, Georg Thieme Verlag, Stuttgart 1977), und mittlere Teilchendurchmesser $d_{50}$ von 0,5 µm (Latex 2a).

b) In einem Reaktor werden bei 65°C vorgelegt:

2168 Gew.-Teile Latex 1b
9500 Gew.-Teile Wasser
27 Gew.-Teile Kaliumpersulfat
1700 Gew.-Teile Wasser

Innerhalb von 4 Stunden werden bei 65°C folgende Mischungen in den Reaktor getrennt eindosiert:

Mischung C: 9214 Gew.-Teile n-Butylacrylat
15 Gew.-Teile Triallylcyanurat
Mischung D: 6600 Gew.-Teile Wasser
156 Gew.-Teile Na-Sulfonat von $C_{14}$–$C_{18}$-Kohlenwasserstoffen.

Anschliessend lässt man 4 Stunden bei 65°C auspolymerisieren. Die gebildeten Polymerisate besitzen einen Gelgehalt von 91 Gew.-%[1], einen Quellungsgrad von 6,5[1] und eine breite Verteilung der mittleren Teilchendurchmesser von 0,2 bis 0,9 µm (Latex 2b), bestimmt durch Ultrazentrifugen-Messungen.

3. Herstellung der Pfropfprodukte 2
In einem Reaktor werden vorgelegt und auf 65°C aufgeheizt:
a Gew.-Teile Latex 2a) bzw. 2b)
Es wird initiiert mit einer Mischung aus
b Gew.-Teile Kaliumpersulfat
c Gew.-Teile Wasser
Innerhalb von 4 Stunden lässt man bei 65°C folgende Mischungen unter Rühren in den Reaktor einlaufen:
Mischung E: d Gew.-Teile Monomer 1
e Gew.-Teile Monomer 2
Mischung F: f Gew.-Teile Wasser
g Gew.-Teile Na-Sulfonat von $C_{14}$–$C_{18}$-Kohlenwasserstoffen

Die Tabelle 1 gibt eine Zusammenstellung der Reaktionskomponenten für die Pfropfprodukte 2 mit den Typen K, L und M.

1) gemessen in Dimethylformamid bei 25°C (M. Hoffmann, H. Krömer, R. Kuhn, Polymeranalytik I und II, Georg Thieme Verlag Stuttgart 1977).

Tabelle 1
Zusammensetzung der Pfropfprodukte

| Pfropfprodukt 2 | | | | | | | | |
|---|---|---|---|---|---|---|---|---|
| Typ | Latex Typ | a | b | c | d | e | f | g |
| K | 2a | 3088 | 3,5 | 145 | 273 MMA | – | 880 | 5 |
| L | 2a | 3088 | 3,5 | 145 | 76,4 AN | 196,6 S | 880 | 5 |
| M | 2b | 13000 | 18 | 1400 | 311 AN | 799 S | 1200 | 22 |

Zahlenangaben von a–g in Gewichtsteilen

MMA = Methylmethacrylat
AN Acrylnitril
S Styrol

Anschliessend wird 4 Stunden bei 65°C auspolymerisiert.

Die Pfropfprodukt-Latices K bis M werden nach Zugabe einer wässrigen Stabilisatordispersion, entsprechend 0,25–1 Gew.-Teil eines phenolischen Antioxidants per 100 Gew.-Teile Latex-Farbstoff, durch Elektrolyt- bzw. Säurezusatz koaguliert. Die resultierenden Pulver werden bei 70°C im Vakuum getrocknet.

4. Herstellung von einem Vergleichs-Pfropfprodukt
Pfropfprodukt, Typ N:
Copolymerisat aus einer Pfropfgrundlage aus

57 Gew.-Teilen n-Butylacrylat
13 Gew.-Teilen Styrol
0,35 Gew.-Teilen 1,3-Butylendiacrylat
0,14 Gew.-Teilen Allylmethacrylat
und einem aufzupfropfenden Monomergemisch
28 Teilen Methylmethacrylat
2 Teilen Acrylsäure
(nach DE-OS 2 144 528)

Pfropfprodukt, Typ O:
Copolymerisat aus n-Butylacrylat und dem Acrylsäureester des Tricyclodecenylalkohols als Pfropfgrundlage und aufgepfropften Einheiten aus 75 Gew.-% Styrol und 25 Gew.-% Acrylnitril (nach DE-OS 2 435 266).

5. Herstellung der Mischungen
Die Einarbeitung der Pfropfprodukte K bis O in Polyamid erfolgt in einem handelsüblichen, kontinuierlich arbeitenden Doppelwellenextruder ZSK 32 der Fa. Werner & Pfleiderer, in der das Polyamid zunächst ausgeschmolzen wurde.

Durch einen zweiten Einfüllstutzen wurde das Pfropfprodukt in die Polyamid-Schmelze eindosiert. Stickstoffbeschleierung ist zweckmässig. Das Pfropfprodukt wurde aufgeschmolzen und im Polyamid homogen verteilt. Es kann vorteilhaft sein, die Schmelze vor dem Austritt aus der Düse zu entgasen. Die Zylindertemperaturen wurden so eingestellt, dass eine Massetemperatur von 280–290°C gewährleistet war. Der Schmelzestrang der Mischung aus Polyamid und Pfropfprodukt wurde in Wasser abgekühlt, granuliert und getrocknet. Vom Granulat wurden auf einer üblichen Spritzgussmaschine Normalkleinstäbe (nach DIN 53 453) und Platten von 3 × 60 × 60 mm bei folgenden Verarbeitungstemperaturen verspritzt.

Polyamid-6-Mischung: Massetemperatur 260 °C
Formtemperatur 80 °C
Polyamid-6,6-Mischungen:Massetempera-
tur 270 °C
Formtemperatur 80 °C

Geprüft wurde an spritzfrischen Prüfkörpern die Kerbschlagzähigkeit (nach DIN 53 453), die Biegefestigkeit (nach DIN 53 452), sowie die Schlagzähigkeit bei mehraxialer Belastung im EKWA-Test (nach DIN 53 443, Blatt 2, Durchschlagung einer Platte von 3 × 60 × 60 mm mit einem Gewicht von 35 kg mit einem Durchstossdorn mit kugelförmiger Spitze, Durchmesser 20 mm, bei einer Fallhöhe von 1 m) und die Fliesslänge in der Fliessspirale.

Die Fliesslänge wurde wie folgt bestimmt: In ein spezielles Werkzeug, das auf 90° gehalten wird, wird mittels einer Spritzgiessmaschine, deren Zylindertemperatur 260 °C beträgt, die zu untersuchende Probe mit einem Spritzdruck von 72 bar eingespritzt. Besonders leichtfliessende Werkstoffe sind in der Lage, unter diesen Bedingungen das Werkzeug zu füllen, so dass man nachher eine 100 cm lange Spirale entnehmen kann. Weniger fliessfähige Werkzeuge füllen unter den beschriebenen Bedingungen das Werkzeug nur teilweise; dann können in Folge der vorzeitigen Erstarrung der Schmelze nur Spiralkörper von < 100 cm Länge erhalten werden.

Als Fliesslänge wird die Länge in cm angegeben, die 5mal reproduziert wurde.

Tabelle 2
Eigenschaften der Polyamid-Formmassen

| Beispiel | Typ | Polyamid $\eta$ rel[3]) | Zusammensetzung % | Pfropfprodukt Typ | % | $a_k$[1]) kJ/m² | Biegefestigkeit MPa | EKWA-Test[2]) W. sec. | Fliesslänge cm |
|---|---|---|---|---|---|---|---|---|---|
| 1 | PA–6 | 3,95 | 90 | K | 10 | 9,2 | 103 | 118 | 38 |
| 2a | PA–6 | 3,95 | 80 | K | 20 | 47,3 | 87 | 135,5 | 36 |
| 2b | PA–6 | 3,50 | 80 | K | 20 | 45,8 | 88 | 132,4 | 51 |
| 3 | PA–6 | 3,95 | 70 | K | 30 | 37,5 | 65 | 112 | 35 |
| 4 | PA–6 | 3,95 | 60 | K | 40 | 18,7 | 51 | 71 | 33 |
| 5 | PA–6 | 3,95 | 80 | L | 20 | 23,8 | 81 | 119 | 33 |
| 6 | PA–6 | 3,95 | 80 | M | 20 | 14,5 | 85 | 105 | 31 |
| 7 | PA–66 | 3,70 | 90 | K | 10 | 7,0 | 108 | 75 | 54 |
| 8 | PA–66 | 3,70 | 80 | K | 20 | 22,5 | 89 | 94 | 52 |
| Vergleichsbeispiele | | | | | | | | | |
| 9 | PA–6 | 3,95 | 90 | N | 10 | 5,5 | 97 | 45 | 23 |
| 10 | PA–6 | 3,95 | 80 | N | 20 | 17,4 | 79 | 65 | 17 |
| 11 | PA–6 | 3,95 | 80 | O | 20 | 11,4 | 82 | 36 | 19 |
| 12 | PA–6 | 3,95 | 100 | – | – | 5,0 | 121 | – | 32–35 |
| 13 | PA–6 | 3,50 | 100 | – | – | 4,0 | 120 | – | 40–45 |
| 14 | PA–66 | 3,70 | 100 | – | – | 3,0 | 126 | – | 50–60 |

1) $a_k$ = Kerbschlagzähigkeit
2) EKWA = Elektronische Kraft/Weg–Aufnahme
3) $\eta$ rel = relative Viskosität, gemessen an einer 1 %igen Lösung von Polyamid in m-Kresol bei 25°C in einem Ubbelohde-Viskosimeter

## Patentansprüche

1. Schlagzähe Formmassen aus

1) 40–99 Gew.-%, bezogen auf 1) und 2), Polyamiden und

2) 1–60 Gew.-%, bezogen auf 1) und 2), von teilchenförmigen Pfropfprodukten mit einem mittleren Teilchendurchmesser ($d_{50}$) von 0,05–3 µm aus

I einem vernetzten Dienkautschuk als Kern,

II einem vernetzten Acrylat-Kautschuk als erste Hülle, und

III einem (Co)Polymerisat von Styrol, α-Methylstyrol oder einem (Meth)-acrylsäurederivat oder Mischungen daraus als zweite äussere Hülle und

3) gegebenenfalls üblichen Hilfs-, Zuschlag-, Füll- und/oder Verstärkungsstoffen.

2. Formmassen nach Anspruch 1, dadurch gekennzeichnet, dass die Komponente 1) in Mengen von 60–98 Gew.-% und die Komponente 2) in Mengen von 2–40 Gew.-% vorhanden ist.

3. Formmassen nach Anspruch 1 oder 2, dadurch gekennzeichnet, dass die sie 70–97 Gew.-% der Komponente 1) und 3–30 Gew.-% der Komponente 2) enthalten.

4. Formmassen nach Ansprüchen 1 bis 3, dadurch gekennzeichnet, dass das Mengenverhältnis des Kerns I zur ersten Hülle II 0,1 zu 99,9 bis 80 zu 20 Gew.-Teilen beträgt.

5. Formmassen nach Ansprüchen 1 bis 4, dadurch gekennzeichnet, dass der Anteil der zweiten Hülle III am gesamten Pfropfprodukt 2) 10 bis 80 Gew.-% beträgt.

6. Formmassen nach Ansprüchen 1–5, dadurch gekennzeichnet, dass der Kern I des Pfropfproduktes 2) aus wenigstens einem konjugierten Dien und gegebenenfalls Styrol und/oder Acrylnitril besteht.

7. Formmassen nach Ansprüchen 1–6, dadurch gekennzeichnet, dass die erste Hülle II des Pfropfproduktes aus einem vernetzten Polymerisat von Acrylsäure-C₁–C₈-Alkylestern, die gegebenenfalls mit Halogen substituiert sein können, oder von aromatisch-aliphatischen Estern von Acrylsäure und gegebenenfalls bis zu 40 Gew.-% weiterer Vinylmonomeren und aus 0,05 bis 10 Gew.-% polyfunktionellen Monomere, vorzugsweise Triallyl-, Trivinylcyanurat, Triallylisocyanurat, 1,3,5-Triacryloyl-hexahydro-S-triazin, Trivinyl- oder Triallylbenzol, bestehen.

8. Formmassen nach Ansprüchen 1 bis 7, dadurch gekennzeichnet, dass die zweite Hülle III aus polymerisiertem Styrol und Acrylnitril oder Methylmethacrylat besteht.

9. Formmassen nach Ansprüchen 1 bis 8, dadurch gekennzeichnet, dass die Komponente 1) aus Polyamid-6 oder Polyamid-6,6 besteht.

10. Formmassen nach Ansprüchen 1 bis 9, dadurch gekennzeichnet, dass die Formmassen bis zu 60 Gew.-% Glasfasern enthalten.

## Claims

1. Impact-resistant moulding composition of
1) 40–99% by weight, based on 1) and 2), of polyamides and
2) 1–60% by weight, based on 1) and 2), for particulate graft products, having an average particle diameter ($d_{50}$) of 0.05–3 μm, of
   I a cross-linked diene rubber as the core,
   II a cross-linked acrylate rubber as the first shell, and
   III a (co)polymer of styrene, α-methylstyrene or a (meth)acrylic acid derivative or mixtures thereof as the second outer shell and
3) optionally, customary auxiliaries, additives, fillers and/or reinforcing materials.

2. Moulding compositions according to Claim 1, characterised in that component 1) is present in quantities of 60–98% by weight and component 2) is present in quantities of 2–40% by weight.

3. Moulding compositions according to Claim 1 or 2, characterised in that they contain 70–97% by weight of component 1) and 3–30% by weight of component 2).

4. Moulding compositions according to Claims 1 to 3, characterised in that the quantitative ratio of the core I to the first shell II is 0.1:99.9 to 80:20 parts by weight.

5. Moulding compositions according to Claims 1 to 4, characterised in that the proportion of the second shell III in the total graft product 2) is 10 to 80% by weight.

6. Moulding compositions according to Claims 1–5, characterised in that the core I of the graft product 2) consists of at least one conjugated diene and optionally styrene and/or acrylonitrile.

7. Moulding compositions according to Claims 1–6, characterised in that the first shell II of the graft product consist of a cross-linked polymer of acrylic acid $C_1–C_8$-alkyl esters, which can optionally be substituted by halogen, or of aromatic-aliphatic esters of acrylic acid and optionally up to 40% by weight of further vinyl monomers and of 0.05 to 10% by weight of polyfunctional monomers, preferably triallyl cyanurate, trivinyl cyanurate, triallyl isocyanurate, 1,3,5-triacryloylhexahydro-S-triazine, trivinyl benzene or triallyl benzene.

8. Moulding compositions according to Claims 1 to 7, characterised in that the second shell III consists of polymerised styrene and acrylonitrile or methyl methacrylate.

9. Moulding compositions according to Claims 1 to 8, characterised in that component 1) consists of polyamide-6 or polyamide-6,6.

10. Moulding compositions according to Claims 1 to 9, characterised in that the moulding compositions up to 60% by weight of glass fibres.

## Revendications

1. Matières à mouler résilientes consistant en:
1) 40 à 99% en poids, par rapport à 1) et 2), de polyamides, et
2) 1 à 60% en poids, par rapport à 1) et 2), de produits de greffage en particules à un diamètre de particule moyen ($d_{50}$) de 0,05 à 3 μm, à base de:
   I. un caoutchouc diénique réticulé en tant que noyau,
   II. un caoutchouc d'acrylate réticulé en tant que première enveloppe, et
   III. un (co)polymère du styrène, de l'α-méthylstyrène ou d'un dérivé d'acide (méth)acrylique ou de mélanges de ces monomères en tant que deuxième enveloppe extérieure, et
3) le cas échéant, des produits auxiliaires, additifs, matières de charge et/ou matières renforçantes usuelles.

2. Matières à mouler selon la revendication 1, caractérisées en ce que le composant 1) est présent en quantités de 60 à 98% en poids et le composant 2) en quantités de 2 à 40% en poids.

3. Matières à mouler selon la revendication 1 ou 2, caractérisées en ce qu'elles contiennent de 70 à 97% en poids du composant 1) et de 3 à 30% en poids du composant 2).

4. Matières à mouler selon les revendications 1 à 3, caractérisées en ce que les proportions relatives entre le noyau I et la première enveloppe II sont de 0,1:99,9 à 80:20 parties en poids.

5. Matières à mouler selon les revendications 1 à 4, caractérisées en ce que la proportion de la deuxième enveloppe III par rapport au produit de greffage total 2) est de 10 à 80% en poids.

6. Matières à mouler selon les revendications 1 à 5, caractérisées en ce que le noyau I du produit de greffage 2) consiste en au moins un diène conjugué et, le cas échéant, du styrène et/ou de l'acrylonitrile.

7. Matières à mouler selon les revendications 1 à 6, caractérisées en ce que la première enveloppe II du produit de greffage consiste en un polymère réticulé d'acrylates d'alkyle en $C_1$–$C_8$ qui peuvent, le cas échéant, être substitués par un halogène, ou d'esters aromatique-aliphatiques de l'acide acrylique et, le cas échéant, d'une proportion allant jusqu'à 40% en poids d'autres monomères vinyliques et en 0,05 à 10% en poids de monomères polyfonctionnels, de préférence du cyanurate de triallyle, du cyanurate de trivinyle, de l'isocyanurate de triallyle, de la 1,3,5-triacryloyl-hexahydro-s-triazine, du trivinylbenzène ou du triallylbenzène.

8. Matières à mouler selon les revendications 1 à 7, caractérisées en ce que la deuxième enveloppe III consiste en styrène et acrylonitrile ou méthacrylate de méthyle polymérisés.

9. Matières à mouler selon les revendications 1 à 8, caractérisées en ce que le composant 1) consiste en polyamide-6 ou polyamide-6,6.

10. Matières à mouler selon les revendications 1 à 9, caractérisées en ce que les matières à mouler contiennent jusqu'à 60% en poids de fibres de verre.